# EUROPEAN PATENT APPLICATION

(11) **EP 0 919 278 A1**
(43) Date of publication of application: **02.06.1999**
(21) Application number: 98119477.2
(22) Date of filing: 15.10.1998
(51) Int. Cl.: B01D 53/86, B01J 23/38

(54) **Process for the catalytic abatement of nitrogen oxides**

(30) Priority: 06.11.1997 US 965351
(71) Applicant: BASF CORPORATION, Mount Olive, New Jersey 07828-1234 (US)
(72) Inventor: Sink, R. Merritt, Lake Jackson, Texas 77566 (US); Losier, Thomas P., Andover, New Jersey 07821 (US)
(74) Representative: Cimniak, Thomas, Dr.

(57) **Abstract**

A process for the catalytic reduction of nitrogen oxide occurs in the presence of hydrogen and a monolithic noble metal supported catalyst.

## Description

The present invention relates to a process for the abatement of nitrogen oxides in off-gas streams and especially to the abatement of nitrogen oxides off-gassed from hydroxylamine production in the presence of hydrogen and a monolithic supported catalyst coated with a noble metal.

As used in this application, "nitrogen oxides" refers to nitric oxide, nitrous oxide, nitrogen dioxide or mixtures thereof.

Various commercially significant chemical processes result in by-product streams. Unless these streams have intrinsic commercial value, they must first be made innocuous before release or converted to a stream having commercial ability.

One method for manufacturing hydroxylamine catalytically reduces nitric oxide with hydrogen. The gas vented from this reaction typically contains hydrogen, nitric oxide (NO), nitrous oxide (N₂O) and nitrogen. This vent gas is typically converted to nitrogen, ammonia and water by a flare. Although the flare system is relatively efficient, the conversion rate achievable using the flare system can be improved upon.

Several catalytic methods are known to remove nitrogen oxide from gases which contain, also, oxygen, carbon monoxide, hydrocarbons or mixtures thereof. These catalytic methods pertain mainly to the catalytic reduction of car exhaust streams e.g., in a catalytic converter. In the catalytic abatement of car exhaust, the usual exhaust stream oscillates between an oxygen rich and an oxygen lean system. Along with oxygen, carbon monoxide, hydrocarbons (from incomplete combustion) and nitric oxide are typically present. Nitrous oxide is not usually a significant component of the stream.

Nitrogen oxides are also abated from off-gases in nitric acid production. This abatement is typically catalyzed.

U.S. Patent No. 4,088,604 to Sermon discusses a catalyst for the decomposition of nitrogen oxides. The catalyst is a mixed oxide of iron and cobalt. U.S. Patent No. 4,143,120 to Sermon discloses a method of removing nitric oxide from gases which also contain carbon monoxide and hydrocarbons and which may contain oxygen. The method employs a bronze catalyst. "Bronze" is defined in the patent as a variety of non-stoichiometric crystalline phases of transition metal binary and ternary oxides.

U.S. Patent No. 4,162,235 to Acres et al. discloses a supported catalyst for the catalytic reduction of oxides of nitrogen, especially for use in automotive catalytic converters. The catalyst includes at least one platinum group metal and, optionally, one or more rare earth base metals (except praseodymium and lanthanum). The catalyst is used for the purification of exhaust gases of internal combustion engines and diesel engines.

U.S. Patent No. 4,237,032 to Evans et al. discloses a catalyst for the purification of exhaust gases of internal combustion engines and of diesel engines. The exhaust gases may include hydrocarbon and nitrogen oxides. The catalyst consists of a support, a washcoat having at least one refractory metal-oxide and nickel; and a catalytically active coating which contains at least one of platinum, rhodium, ruthenium, palladium, iridium, osmium, gold and silver.

U.S. Patent No. 4,782,039 to Lindsey discusses a selective catalytic reduction catalyst for the removal of oxides of nitrogen from exhaust streams which streams contain excess oxygen and ammonia. The catalyst consists of vanadium oxide carried by a mixture of cerium oxide and alumina.

U.S. Patent No. 4,902,487 describes oxidizing NO in diesel exhaust gas to NO₂ by reaction with oxygen in the presence of a platinum (or platinum group metal) monolithic catalyst.

The journal article by Otto and Shelef entitled "Studies of Surface Reactions of NO by Isotope Labeling", Zeitschrift für Physikalische Chemie Nueu Folge, 1973, pp. 308-322 describes reduction of NO by ammonia and hydrogen over an alumina supported ruthenium catalyst.

There remains a need to abate nitrogen oxides off-gassed from sources other than car exhaust, such as sources like hydroxylamine production. Such off-gas streams typically have a composition behaviorally quite different from automobile combustion engine off-gases.

The present invention involves a process for the catalytic abatement of a nitrogen oxide, which comprises contacting a gas stream comprising nitrogen oxide and hydrogen with a monolithic supported catalyst coated with a noble metal.

An object of the present invention is a process for the catalytic reduction of a nitrogen oxide in the presence of hydrogen.

Another object of the present invention is a process for the catalytic reduction of a nitric oxide and nitrous oxide in the presence of hydrogen.

A further object of the present invention is a process to reduce nitrogen oxides off-gassed from hydroxylamine synthesis.

To promote an understanding of the principles of the present invention, descriptions of specific embodiments of the invention follow and specific language describes the same. It will nevertheless be understood that no limitation of the scope of the invention is thereby intended, and that alterations, modifications and further applications of the principles of the invention discussed are contemplated. Such would normally occur to one ordinarily skilled in the art to which the invention pertains.

The present invention is a process for reducing nitrogen oxides contained in off-gases, preferably to ammonia, by contacting the gases with a monolithic supported noble metal catalyst in the presence of hydrogen. The present invention may be used to abate nitrogen oxide from, for example, production processes like hydroxylamine production processes.

Hydroxylamine may be prepared by catalytically reducing nitric oxide with hydrogen in a dilute aqueous mineral acid in the presence of a suspended noble metal catalyst at an elevated temperature. The vent gases of this reaction typically contain nitric oxide, nitrous oxide, hydrogen and nitrogen. The vent gases may also contain traces of ammonia and methane. The exact composition of the vent gases depends on the reaction conditions. Although subject to wide swings in actual total nitrogen oxide content, in general, the vent gases contain from about 5 to about 15% by volume, more typically from about 10 to about 13% by volume of nitric oxide; from about 1 to about 15% by volume, more typically from about 6 to about 10% by volume of nitrous oxide; from about 60 to about 80% by volume, more typically from about 68 to about 78% by volume of hydrogen; and usually another gas like nitrogen, water, methane, ammonia or mixtures thereof. For example, from 5 to about 30% by volume nitrogen may be present. As a mixture, from about 8 to about 27.9% by volume of nitrogen with from about 0.1 to about 3% by volume of methane may be present. From about 4 to about 27.8% by weight of nitrogen with from about 0.1 to about 3% by volume of methane and from about 0.1 to about 1.0% by volume of ammonia may be present. One typical vent gas composition is approximately 12% nitric oxide, 9% nitrous oxide, 70% hydrogen, 8% nitrogen and 1% methane (all by volume). Oxygen, carbon dioxide and hydrocarbons (other than CH4) are not components of the vent gas. Oxygen especially is disadvantageous because of the possible explosion hazard presented by ammonium nitrate (NH4NO3) which can form in the presence of oxygen.

Due to the exothermic nature of the reduction reaction, in the present invention, the vent gas is preferably diluted with nitrogen to a nitric oxide concentration of from about 0.5 to about 5% by volume, preferably, for example, from about 1 to about 3% by volume; a concentration of nitrous oxide of from about 0.5 to about 5% by volume, preferably from about 1 to about 3% by volume; from about 3 to about 40% by volume of hydrogen, preferably from about 5 to about 10% by volume; and from about 50 to about 96% by volume of the other gases like nitrogen and traces of methane and ammonia. If the nitrogen oxide concentration is too high, the exotherm caused by the reduction can produce temperatures (e.g., in excess of 1350ºF) damaging the catalyst. Such exotherms should, therefore, be avoided. The exotherm is easily regulated by controlling the nitrogen oxide feed concentration through the dilution process.

The gas stream is contacted with a supported monolithic catalyst, which is coated with a noble metal. Monolithic support catalysts and methods for their preparation are known generally. Suitable catalysts are available from, for example, Johnson Matthey Inc., Valley Forge, PA.

The monolithic support may be metal or, preferably, ceramic. The support is preferably an inert unitary porous refractory ceramic honeycomb. Although the honeycomb structure is presently preferred, it is envisioned that the support may be in the form of pellets, powder, granules, spherules, powder-shaped extrudates or, for example, a corrugated or extended metallic substrate or nichrome wire. Suitable materials which may be used to constitute a ceramic support are zircon-mullita, mullite, alumina, sillimanite, silica magnesium silicants, kaolin clays, zircon petalite, spodumene, cordierite and most aluminosilicants. Examples of such materials are THERMACOMB®, a cordierite honeycomb supplied by the American Lava Corporation and EM® 20, a cordierite honeycomb supplied by Corning Glass.

The preferably ceramic substrate is coated with a washcoat which comprises at least one of the oxides of aluminum, magnesium, calcium, strontium, barium, scandium, yttrium, the lanthanides, gallium, indium, thallium, silicon, titanium, zironium, hafnium, thorium, germanium, tin, lead, vanadium, niobium, tantalum, chromium, molybdenum, tungsten and rhenium.

The dried washcoated substrate is impregnated with a water soluble decomposable compound of at least one noble metal and calcinated at a temperature of from about 350°C to about 650°C. Suitable noble metals are platinum, palladium, rhodium, ruthenium, iridium, osmium, gold and silver. Preferred are platinum, rhodium, ruthenium, and mixtures thereof and most preferred are platinum, rhodium and mixtures thereof. The preferred concentration of the noble metal on the supported catalyst is from about 1 to about 250 grams per ft3 of volume of the supported catalyst, more preferably from about 2 to about 200 grams per ft3.

The vent gas stream containing nitrogen oxide and hydrogen is contacted with the supported catalyst at a preferable inlet gas temperature of from about 100°F to about 600°F, more preferably from about 125°F to about 400°F. In some cases, it may be advantageous to use a preheater to the system to help bring the vent gas to reaction temperature. The specific reaction temperature will depend on the catalyst used.

The preferable space velocity, calculated on a volume basis, is from about 4,000 hr-1 to about 50,000 hr-1, more preferably from about 10,000 hr-1 to about 30,000 hr-1.

The present invention converts an off-gas stream containing nitric oxide, nitrous oxide and hydrogen exothermically under the conditions described above to nitrogen, ammonia and water. The conversion of the nitrogen oxides using the present invention is from about 95 to about 99.9%, preferably from about 98 to 99.9%. The reactor temperature can be readily adjusted to maintain nitrogen oxide conversion rates in response to a varied level of ammonia if observed in the system. The amount of adjustment necessarily will be readily apparent to those ordinarily skilled in the art.

Another embodiment of the present invention relates to recovering ammonia from the previous catalytic abatement of nitrogen oxides. The selectivity of NO to ammonia is from about 30 to about 40 mol % at a temperature of from about 125 to about 200°F and from about 60 to about 80 mol % at a temperature of from about 300 to about 600°F.

According to the invention, ammonia is recovered from the exhaust gas stream by washing it out with a solvent or, possibly, by freezing it. Suitable washing solvents are those which dissolve ammonia like, for example, water or organic solvents. Suitable organic solvents include alcohols, like methanol, ethanol, propanol, ethylene glycol, diethylene glycol and the like; and amines like triethanolamine, esters like ethyl acetate, ketones like acetone and cyclohexanone, ethers like dibutyl ether, alkanes like C6- to C18- alkanes, for example, octane, decane and mixtures thereof. Water is currently preferred.

The exhaust gas may be washed in a scrubber by spraying the solvent through a nozzle in a counterflow against the abated exhaust gas stream. The dissolved ammonia may be separated from the solvent by distillation. Alternatively, the diluted ammonia may be used itself as a solution.

The washed exhaust gas stream may optionally be returned to the abatement process as diluent gas for the vent gas as described above. Preferably, this recycled gas is treated (e.g., with heat) to remove water droplets.

In another aspect of the present invention, the vent gas is diluted using the recycle gas from the catalytic abatement of nitrogen oxide, preferably after about 95% of the ammonia in the gas is recovered. This recycle gas typically contains from about 20 to about 40% by volume nitrogen, from about 55 to about 80% by volume hydrogen and from about 1 to about 25% by volume other gases like water, methane and ammonia. The vent gas is diluted with the recycle gas to a concentration of nitric oxide of from about 0.5 to about 5% by volume, preferably from about 1 to about 3% by volume; a concentration of nitrous oxide of from about 0.5 to about 5% by volume, preferably from about 0.5 to about 2% by volume, a concentration of hydrogen of from about 50 to about 80% by volume, preferably from about 55 to about 75% by volume; and from about 19 to about 49% by volume, preferably from about 23.5 to about 43.5% by volume of other gases like nitrogen, steam, methane and ammonia.

In the following examples, nitric oxide and nitrous oxides were initially evaluated alone without mixing them. The nitric oxide and hydrogen are converted exothermically to nitrous oxide, ammonia, nitrogen and water. The observed conversion of nitric oxide is from about 95 to about 99.9%. It is noted that as the inlet feed gas temperature increases the selectivity of the reaction favors formation of ammonia. Nitrous oxide and hydrogen are converted exothermically under the conditions described above to nitrogen and water with trace amounts of ammonia. The observed conversion of the nitrous oxide is from about 95 to about 99.9%. In the following examples, the conversion rate is measured with gas analyzers using infra-red detection. The method is calibrated with commercially available nitrogen oxide gas standards.

The invention will be described by referring to the following detailed examples. These examples are set forth by way of illustration and are not intended to be limiting in scope. All percentages are by volume unless otherwise noted.

### EXAMPLE 1

### Nitrous Oxide Abatement-Pt Catalyst

A gas mixture containing 1.5% by volume of nitrous oxide, 10% by volume of hydrogen and 88.5% by volume of nitrogen is contacted with a low pressure drop honeycomb monolithic stainless steel catalyst containing 40 g/ft3 platinum. The space velocity is 20,000 hr-1 and the inlet gas temperature is 350°F. The conversion of the nitrous oxide is 99.0%.

### EXAMPLE 2

### Nitrous Oxide Abatement-Rh Catalyst

A gas mixture containing 1.5% by volume of nitrous oxide, 10% by volume of hydrogen and 88.5% by volume of nitrogen is contacted with a low pressure drop honeycomb monolithic stainless steel catalyst containing 40 g/ft3 rhodium. The space velocity is 30,000 hr-1 and the inlet gas temperature is 300°F. The conversion of the nitrous oxide is 99.9%.

### EXAMPLE 3

### Nitric Oxide Abatement-Pt Catalyst

A gas mixture containing 1.5% by volume of nitric oxide, 10% by volume of hydrogen and 88.5% by volume of nitrogen is contacted with a low pressure drop honeycomb monolithic stainless steel catalyst containing 40 g/ft3 platinum. The space velocity is 20,000 hr-1 and the inlet gas temperature is 150°F. The conversion of the nitric oxide is 99.0%.

### EXAMPLE 4

### Mixed Nitrogen Oxides Abatement-Pt Catalyst

A gas mixture containing 1.5% by volume of nitric oxide, 1.5% by volume of nitrous oxide, 10% by volume of hydrogen and 87% by volume of nitrogen is contacted with a low pressure drop honeycomb monolithic stainless steel catalyst containing 40 g/ft3 platinum. The space velocity is 20,000 hr-1 and the inlet gas temperature is 350°F. The conversion of the nitrogen oxides is 99.7%.

### EXAMPLES 5 a) and 5 b)

### Mixed Nitrogen Oxides Abatement-Pt Catalyst-Gas Temperature

A gas mixture containing 1.5% by volume of nitric oxide, 1.5% by volume of nitrous oxide, 10% by volume of hydrogen and 87% by volume of nitrogen is contacted with a low pressure drop honeycomb monolithic stainless steel catalyst containing 40 g/ft3 platinum. The space velocity is 20,000 hr-1. The varied inlet gas temperature of a) 200°F or b) 400°F is used. The respective conversion of the nitrogen oxides at the two temperature is a) 98% and b) 99.7%. The catalyst selectivity toward formation of ammonia is respectively a) 46 % and b) 67%.

### EXAMPLE 6

### Mixed Nitrogen Oxides Abatement-Pt Catalyst

A gas mixture containing 1.0% by volume of nitric oxide, 2.0% by volume of nitrous oxide, 10% by volume of hydrogen and 87% by volume of nitrogen is contacted with a low pressure drop honeycomb monolithic stainless steel catalyst containing 40 g/ft3 platinum. The space velocity is 30,000 hr-1 and the inlet gas temperature is 350°F. The conversion of the nitrogen oxides is 98%.

### EXAMPLE 7

### Pt Catalyst-Temperature Effect

A gas mixture containing 1,000 ppm NO, 30,000 ppm H2 and the balance N2 is contacted at a space velocity of 40,000/hr and a pressure of 5 psig with platinum catalyst on a monolithic stainless steel support. Measurements of NO, NH3 and N2 concentrations are made at 200, 300, 400, 500 and 600°C. The results are shown in Table 1.

**TABLE 1**

| Inlet Temp. (°C) | Inlet Conv.to NH₃* (%) | Outlet Conv. to NH₃ (%) | Outlet Conv. to N₂ (%) | Overall Conv. of NO (%) | NO Conc. in Exit (ppm) |
|---|---|---|---|---|---|
| 200 | 2.4 | 60.6 | 39.4 | >99.9 | <1.0 |
| 300 | 7.9 | 68.8 | 31.4 | >99.9 | <1.0 |
| 400 | 11.9 | 60.8 | 39.2 | >99.9 | <1.0 |
| 500 | 39.6 | 60.8 | 39.2 | >99.9 | <1.0 |
| 600 | 19.8 | 34.3 | 65.7 | >99.9 | <1.0 |

| | | | | | |
|---|---|---|---|---|---|
| * Some conversion occurs before the catalyst because of the gas mixture composition and heat at the reactor inlet. | | | | | |

### EXAMPLE 8

### Pd-Temperature Effect

A gas mixture containing 1,000 ppm NO, 30,000 ppm H2 and the balance N2 is contacted at a space velocity of 40,000/hr and a pressure of 5 psig with palladium catalyst on a monolithic stainless steel support. Measurements of NO, NH3 and N2 concentrations are made at 200, 300, 400, 500 and 600°C. The results are shown in Table 2.

**TABLE 2**

| Inlet Temp. (°C) | Inlet Conv. NH₃* (%) | to Outlet Conv. to NH₃ (%) | Outlet Conv. to N₂ (%) | Overall Conv. of NO (%) | NO Conc. in Exit (ppm) |
|---|---|---|---|---|---|
| 200 | 7.9 | 65.5 | 34.5 | >99.9 | <1.0 |
| 300 | 15.7 | 77.2 | 22.8 | >99.9 | <1.0 |
| 400 | 62.6 | 73.0 | 27.0 | >99.9 | <1.0 |
| 500 | 50.8 | 80.8 | 19.2 | >99.9 | <1.0 |
| 600 | 43.0 | 48.1 | 51.9 | >99.9 | <1.0 |

| | | | | | |
|---|---|---|---|---|---|
| * Some conversion occurs before the catalyst because of the gas mixture composition and heat at the reactor inlet. | | | | | |

### EXAMPLE 9

### Rh Catalyst-Temperature Effect

A gas mixture containing 1,000 ppm NO, 30,000 ppm H2 and the balance N2 is contacted at a space velocity of 40,000/hr and a pressure of 5 psig with rhodium catalyst on a monolithic stainless steel support. Measurements of NO, NH3 and N2 concentrations are made at 200, 300, 400, 500 and 600°C. The results are shown in Table 3.

**TABLE 3**

| Inlet Temp. (°C) | Inlet Conv. to NH₃* (%) | Outlet Conv. to NH₃ (%) | Outlet Conv. to N₂ (%) | Overall Conv. of NO (%) | NO Conc. in Exit (ppm) |
|---|---|---|---|---|---|
| 200 | 2.3 | 23.7 | 52.8 | 72.0 | 235 |
| 300 | 7.5 | 59.0 | 41.0 | >99.9 | <1.0 |
| 400 | 20.6 | 59.7 | 40.3 | >99.9 | <1.0 |
| 500 | 48.5 | 70.9 | 29.1 | >99.9 | <1.0 |
| 600 | 28.0 | 41.0 | 59.0 | >99.9 | <1.0 |

| | | | | | |
|---|---|---|---|---|---|
| * Some conversion occurs before the catalyst because of the gas mixture composition and heat at the reactor inlet. | | | | | |

### EXAMPLE 10

### Pt Catalyst-Stainless Steel Support

Vent gas from hydroxylamine production is diluted with nitrogen such that it contains 4.06% by volume of nitrogen oxides (1.9% by volume is N2O), 12.7% H2, 0.80% CH4, 2 ppm CO and 0.02% CO2. Dilution is achieved by flowing to the reactor the vent gas at about 1.4 m3/hr and the nitrogen at about 7.9 m3/hr. The diluted gas is contacted with a honeycomb monolithic alumina on stainless steel catalyst with a surface area of about 74 in2/in3 containing 60 g/ft3 platinum. The catalyst is 4 inches in height and 7 inches in length. The space velocity is 20,000 hr-1 and the inlet gas temperature is about 250°C. The exit temperature is 350 to 400ºC. The conversion of the nitrous oxide is 99.5%. The composition of the treated stream is 0.051 vol % nitrogen oxides (0.05% is N2O), 9.8% H2, 0.17% CH4, 1.08% NH3, 0.215 ppm CO and 0.37% CO2.

### EXAMPLE 11 A-D

### Pt Catalyst-Ceramic Support

Vent gas from hydroxylamine production is diluted with nitrogen such that it contains the composition listed in Table 4. Dilution is achieved by flowing the vent gas and nitrogen at the respective rates shown in Table 4. The diluted vent gas is contacted with a honeycomb monolithic ceramic catalyst with a surface area of 62 in2/in3 containing 40 g/ft3 platinum. The catalyst is 4 inches in height and 9 inches in length. The space velocity is 30,000 hr-1. The conversion of the nitrous oxide is 99.5%. The abated vent gas has the composition shown in Table 5.

**TABLE 4**

| Reactor Conditions | | | | | |
|---|---|---|---|---|---|
| Example | N₂ Flow (m³/h) | Vent Gas Flow (m³/h) | Inlet Temp (ºC) | Outlet Temp (ºC) | Pressure (mbar) |
| 11A | 9.9 | 3.4 | 205 | 310 | 100 |
| 11B | 11.2 | 3.5 | 215 | 315 | 100 |
| 11C | 7.5 | 3.5 | 205 | 345 | 85 |
| 11D | 6.9 | 2.8 | 240 | 285 | 80 |

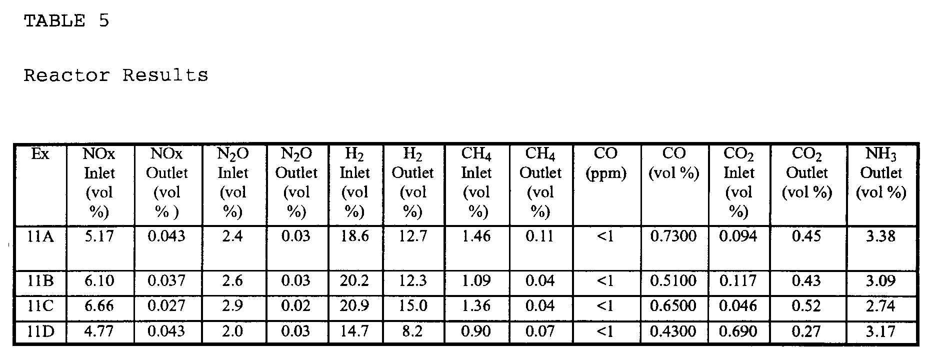

## Claims

1. A process for the catalytic reduction of nitrogen oxide, comprising contacting a gas stream containing one or more nitrogen oxide and hydrogen with a monolithic supported noble metal catalyst.

2. The process of claim 1 wherein nitrogen oxide is selected from the group consisting:
nitric oxide;
nitrous oxide; and
mixtures thereof.

3. The process of claim 2 wherein the gas stream is a vent gas stream from hydroxylamine production.

4. The process of claim 1 wherein the monolithic catalyst support is selected from the group consisting of a honeycomb monolith and pellets.

5. The process of claim 4 wherein the monolithic catalyst support is a honeycomb monolith.

6. The process of claim 5 wherein the honeycomb monolithic support comprises a stainless steel support coated with alumina.

7. The process of claim 5 wherein the honeycomb monolithic support comprises a ceramic support coated with alumina.

8. The process of claim 1 wherein the noble metal is selected from the group consisting of:
platinum;
palladium;
rhodium;
ruthenium;
iridium;
osmium;
gold;
silver; and
mixtures thereof.

9. The process of claim 1 wherein the noble metal is platinum.

10. The process of claim 1 wherein the noble metal is rhodium.

11. The process of claim 1 wherein the gas stream comprises:
(i) from about 0.5 to about 5.0% by volume nitric oxide;
(ii) from about 0.5 to about 5.0% by volume nitrous oxide;
(iii) from about 3.0 to about 40.0% by volume hydrogen; and
(iv) from about 50 to about 96% by volume of another gas.

12. The process of claim 11 wherein the other gas is selected from the group consisting of:
nitrogen;
methane;
ammonia;
and mixtures thereof.

13. The process of claim 1 wherein the catalytic abatement of the nitrogen oxide has a conversion efficiency between about 95 to about 99.9%.

14. A process for the catalytic abatement of a nitrogen oxide which comprises:
diluting vent gas from hydroxylamine production, said vent gas comprising nitric oxide, nitrous oxide and hydrogen; and
contacting the resulting diluted vent gas with a supported catalyst, coated with a noble metal.

15. The process of claim 14 wherein said diluting agent is with nitrogen.

16. The process of claim 14 wherein said diluting is with diluent gas recycled after said contacting, said diluent gas comprising nitrogen, hydrogen and ammonia.

17. The process of claim 14 wherein the diluted vent gas comprises:
(i) from about 0.5 to about 5.0% by volume nitric oxide;
(ii) from about 0.5 to about 5.0 % by volume nitrous oxide;
(iii) from about 50 to about 80% by volume hydrogen; and
(iv) from about 19 to about 49% by volume of another gas selected from the group consisting of:
nitrogen;
water;
methane;
ammonia; and
mixtures thereof.
